Europäisches Patentamt

European Patent Office

Office européen des brevets

(11) Veröffentlichungsnummer: **0 029 979**
**A1**

## (12) EUROPÄISCHE PATENTANMELDUNG

(21) Anmeldenummer: 80107295.0

(22) Anmeldetag: 22.11.80

(51) Int. Cl.³: **G 05 D 11/03**
**B 65 D 47/34, F 04 B 23/02**

(30) Priorität: 03.12.79 DE 2948582

(43) Veröffentlichungstag der Anmeldung:
10.06.81 Patentblatt 81/23

(84) Benannte Vertragsstaaten:
AT BE CH DE FR GB IT LI NL SE

(71) Anmelder: LANG APPARATEBAU GMBH
Raiffeissenstrasse 7
D-8221 Siegsdorf Obb.(DE)

(72) Erfinder: Kern, Johann
Birkenweg 6
D-8221 Vachendorf(DE)

(72) Erfinder: Hoffmann, Peter
Mühlen 35
D-8221 Vachendorf(DE)

(74) Vertreter: Bornemann, Dieter, Dipl.-Ing.
c/o Henkel Kommanditgesellschaft auf Aktien
-Patentabteilung- Postfach 1100 Henkelstrasse 67
D-4000 Düsseldorf(DE)

(54) Dosiereinrichtung.

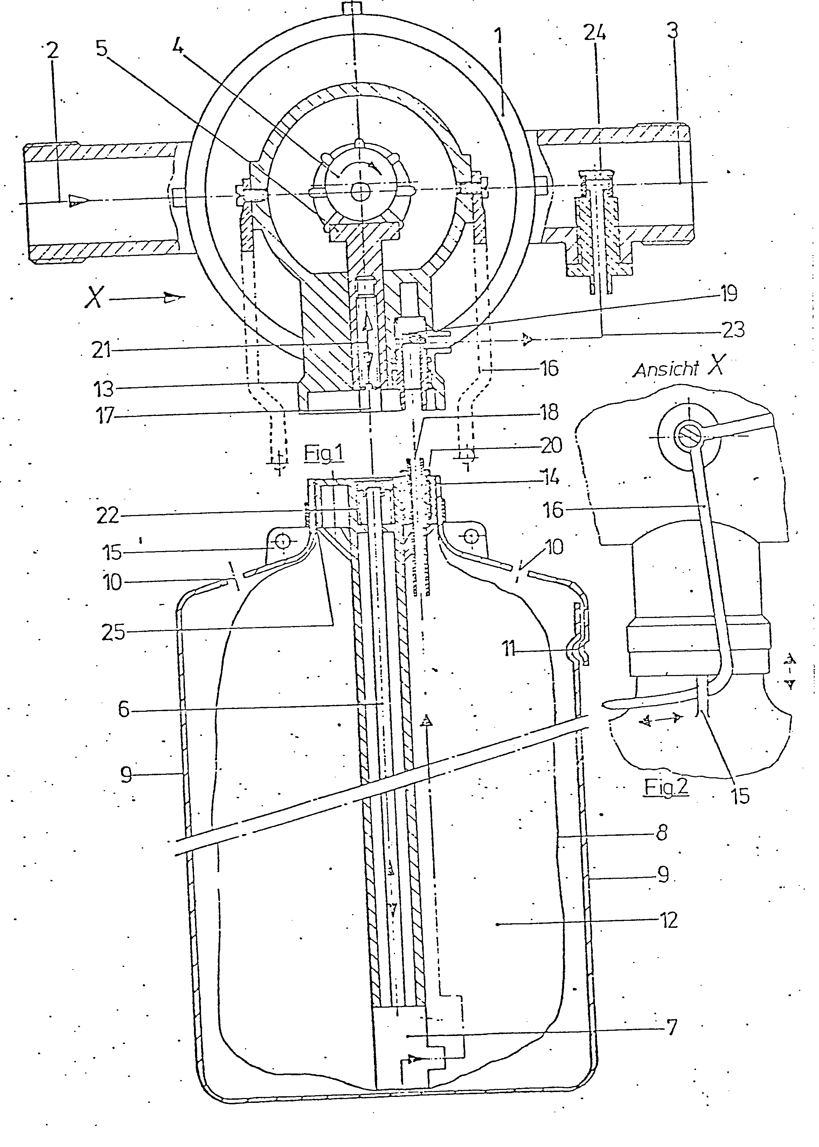

(57) Die Erfindung betrifft eine Dosiereinrichtung zum Eindosieren von Chemikalien in ein Flüssigkeitssystem mit einer in das in einem Vorratsbehälter befindliche Dosierchemikal abgesenkten Einweg-Tauch-Dosierpumpe. Der Aufwand der Einrichtung soll vermindert werden. Erfindungsgemäß ist als Vorratsbehälter ein flexibler Beutel 8 mit eingeschweißter Einweg-Dosierpumpe 7 vorgesehen (Figur 1).

EP 0 029 979 A1

./...

Fig.1

Ansicht X

Fig.2

0029979
LANG APPARATEBAU GMBH

"Dosiereinrichtung"

P a t e n t a n s p r ü c h e

1. Dosiereinrichtung zum Eindosieren von Chemikalien in ein Flüssigkeitssystem, insbesondere in eine Wasserleitung, mit einer in Form einer Einwegpumpe in das in einem Behälter befindliche Dosierchemikal abgesenkten, insbesondere von einem Antrieb, wie einem Elektromotor, Wassermotor oder Hubmagneten, zu betätigenden Tauch-Dosierpumpe nach Patentanmeldg. 29 31 495.2, gekennzeichnet durch einen flexiblen, belüftungsfreien Beutel (8) mit darin eingeschweißter Einweg-Dosierpumpe (7) als Behälter für das Dosierchemikal (12.

2. Vorrichtung nach Anspruch 1, dadurch gekennzeichnet, daß der Beutel (8) in einen belüfteten, steifen Schutzbehälter (9) eingesetzt ist.

3. Vorrichtung nach Anspruch 1 oder 2, dadurch gekennzeichnet, daß der Schutzbehälter (9) Verbindungsmittel und Leitungen umfassendes Kupplungsteil (14) zum Koppeln von Pumpe (7) und Pumpenantrieb (1, 13) aufweist.

4. Vorrichtung nach einem oder mehreren der Ansprüche 1 bis 3, dadurch gekennzeichnet, daß der Schutzbehälter (9) eine verschließbare Öffnung (11), insbesondere als Schraub- oder Schnappverschluß, zum Einsetzen eines mit Dosierchemikal (12) gefüllten, flexiblen Beutels (8) mit eingeschweißter Dosierpumpe (7) aufweist.

/2

5. Vorrichtung nach einem oder mehreren der Ansprüche
1 bis 3, dadurch gekennzeichnet, daß der Schutzbehälter
(9) eine verschließbare Öffnung zum Einsetzen eines eine
Einweg-Dosierpumpe (7) bereits enthaltenden Beutels (8)
aufweist, wobei Mittel zum anschließenden Befüllen des
Beutels (8) mit Chemikal (12) vorgesehen sind.

Der erfindungsgemäß vorgesehene Beutel kann beispielsweise aus undurchsichtigem Kunststoff, insbesondere Polyäthylen, bestehen, um eine Verkeimung des Dosierchemikals durch Lichtbestrahlung zu verhindern. Demgegenüber soll der Schutzbehälter klarsichtig gestaltet sein, damit der Verbrauch des Chemikals sichtbar ist.

Zum Befüllen der erfindungsgemäßen Vorrichtung gibt es mindestens zwei Möglichkeiten. In einem Fall wird der Beutel mit eingeschweißter Dosierpumpe aber ohne das Dosierchemikal in den auch als Schutzgebinde zu bezeichnenden Schutzbehälter eingebracht und erst dann mit Dosierchemikal gefüllt. Im anderen Fall wird der Beutel mit eingeschweißter Dosierpumpe bereits außerhalb des Schutzbehälters mit Dosierchemikal gefüllt. Der Schutzbehälter muß dann natürlich eine Öffnung aufweisen oder zum Beispiel zweiteilig mit Unter- und Oberteil ausgestaltet sein, derart, daß der gefüllte Beutel mit Dosierpumpe einzubringen ist.

/4

Anhand der schematischen Darstellung eines Ausführungsbeispiels werden weitere Einzelheiten der Erfindung erläutert. Es zeigen:

Fig. 1 eine Sprengbild-Schnittzeichnung der Dosiereinrichtung; und

Fig. 2 einen Teil der Seitenansicht einer gekuppelten
Einrichtung.

Die Figuren 1 und 2 zeigen eine Chemikalien-Dosiereinrichtung, deren Antrieb in ein Wassersystem eingebaut ist,
wobei an den Antrieb ein Chemikalienvorratsbehälter mit
integrierter Einwegpumpe anzukuppeln ist. Der in das Wassernetz eingebaute, zum Beispiel als Wassermotor ausgebildete und insgesamt mit 1 bezeichnete Antrieb wird bei
vom Anschluß 2 zum Anschluß 3 fließendem Wasserstrom betätigt und bewegt seinerseits über ein Getriebe einen
Exzenter 4, durch welchen mittels eines Stößels 5 und
einer Kolbenstange 6 eine Auf- und Abbewegung einer Dosierpumpe 7 bewirkt wird. Der Antrieb 1 mit Anschlußteilen
einerseits und der erfindungsgemäß als flexibler Beutel 8
ausgebildete Chemikalienvorratsbehälter mit integrierter
Einweg-Dosierpumpe 7 andererseits sind separat ausgeführt.

Zum Schutz des Beutels 8 und zum bequemeren Handhaben der
Einrichtung kann dieser in einen steifen Schutzbehälter 9
eingesetzt sein, der dann zweckmäßig auch gewisse Kupplungsteile zum Koppeln von Pumpe 7 und Pumpenantrieb 1
aufweist. Während der Beutel 8 vorteilhaft aus undurchsichtigem Material, zum Beispiel Polyäthylen, besteht, um
eine Verkeimung des Dosierchemikals durch Lichteinwirkung
zu verhindern, soll der Schutzbehälter 9 klarsichtig gestaltet sein, damit man sieht, wann das Chemikal ver-

/5

brauchtt ist. Während ferner auf eine Belüftung des Beutels 8 verzichtet werden kann, da sich der Beutel beim Abpumpen des Chemikals zusammenziehen darf, muß der Schutzbehälter 8 natürlich mindestens eine Belüftung aufweisen, die allerdings beliebig gestaltet sein kann, beispielsweise eignen sich Belüftungslöcher 10 gemäß Zeichnung.

Der erfindungsgemäß vorgesehene Beutel 8 mit eingeschweißter Dosierpumpe 7 kann zum Beispiel nach dem Einsetzen in den Schutzbehälter 9 mit dem vorgeschenen Dosierchemikal gefüllt werden. Es ist aber auch möglich, den Beutel 8 mit eingeschweißter Dosierpumpe 7 bereits außerhalb des Schutzbehälters 8 zu befüllen und ihn in diesem Zustande in das Schutzgebinde einzubringen. Der Schutzbehälter 9 muß dann natürlich so gestaltet sein, daß eine zum Einsetzen des gefüllten Beutels 8 mit eingeschweißter Dosierpumpe 7 ausreichende Öffnung vorhanden ist. Der Schutzbehälter 9 kann dann zum Beispiel zweiteilig mit Schnappverbindung 11 (vergleiche rechte Seite von Figur 1) ausgebildet sein.

Voraussetzung für das Dosieren ist alsdann das Ankoppeln eines mit Dosierchemikal 12 gefüllten Beutels 8 mit eingeschweißter Dosierpumpe 7 an das zugehörige Lagerteil 13 des Antriebs 1. Hierzu können beispielsweise in zwei am Kupplungsteil 14 des Beutels 8, der integriert eingeschweißten Dosierpumpe 7 bzw. des Schutzbehälters 9 vorgesehene Ösen 15 Befestigungsbügel 16 eingeführt werden, welche schwenkbar am Lagerteil 13 befestigt sind. Eine Nut 17 am Lagerteil 13 und eine dieser entsprechende Feder im Kupplungsteil 14 stellen sicher, daß der Beutel 8 mit integrierter Dosierpumpe 7 und das Lagerteil 13 nur in einer einzigen Stellung zu kuppeln sind. Wenn die Feder in die Nut 17 eingesetzt ist, lassen sich das Kupplungsteil 14 mit Pumpe 7 und der Antrieb 1 durch eine Schließbewegung des Befestigungsbügels 16 in den betriebsfertig gekoppelten Zustand bringen. Bei diesem Schließvorgang wird die Dosierleitung 18 vollkommen nach außen abgedichtet in ein im Lagerteil 13 vorgesehenes Rückschlagventil 19 eingeführt. Zum Abdichten kann auch ein O-Ring 20 verwendet werden, der eventuell zusammen mit dem Kupplungsteil 14 auszutauschen ist.

Der vom Exzenter 4 betätigte Stößel 5 betreibt über eine Verstellschraube 21 die Dosierpumpe 7. Mit Hilfe der Verstellschraube 21 kann die Dosiermenge in einem gewissen Bereich auf einfache Weise voreingestellt werden. Es ist darauf hinzuweisen, daß der Antrieb 1 lediglich die Abwärtsbewegung der Kolbenstange 6 bewirkt, für die Rückbewegung ist nämlich im Ausführungsbeispiel eine Feder 22 vorgesehen.

Bei der erfindungsgemäßen Einrichtung gemäß Zeichnung gelangt die dosierte Chemikalienmenge über die Dosierleitung 18, das Rückschlagventil 19 und die Verbindungsleitung 23 zur Impfstelle 24 im Wasserleitungsanschluß 3. Die Impfstelle 24 ist zweckmäßig zugleich als Rückschlagventil ausgebildet, um ein Rückfließen von Wasser und/oder Chemikal aus der Wasserleitung auszuschließen.

Durch die Belüftungsöffnungen 10 des Schutzbehälters 9 gelangt in dem Maße Luft in das Gebinde, indem aus dem Beutel 8 Dosierchemikal abgepumpt wird und dieser sich zusammenzieht. Da im Schutzbehälter 9 also ein Unterdruck nicht entsteht, kann das Schutzgebinde beim Dosieren nicht eingebeult werden. Ist der Chemikalienvorrat im flexiblen Beutel 8 gemäß Ausführungsbeispiel verbraucht, so kann der Beutel durch eine einfache Öffnungsbewegung des Befestigungshebels 16 zusammen mit der Dosierpumpe 7 vom Lagerteil 13 abgenommen und - eventuell nach Trennung vom Schutzbehälter 9 und/oder vom Kupplungsteil 14 - gegebenenfalls vernichtet werden. Das Trennen von Beutel 8 und Pumpe 7 einerseits von dem Schutzbehälter 9 andererseits kann auch durch Lösen einer Klemmverbindung 25 am Kupplungsteil 14 erfolgen. Das Rückschlagventil 19 verhindert auch während der Zeit des Austausches ein Zurückfließen von Chemikal aus der Verbindungsleitung 23.

Der Chemikalienverbrauch kann durch Beobachung des jeweils verbleibenden Volumens des flexiblen Beutels 8 überprüft werden. Sollte jedoch der Zeitpunkt der vollständigen Entleerung übersehen werden, so erleidet der Antrieb 1 keinen Schaden. Beschädigt werden kann nach einer gewissen Zeit des Trockenlaufs nur die Dosierpumpe 7. Eine Zerstörung der letzteren stellt aber keinen echten Schaden dar, da die Pumpe 7 ohnehin zusammen mit dem entleerten Beutel auszutauschen ist. Wenn dann ein neuer Chemikalienbeutel 8 mit integrierter Einweg-Dosierpumpe 7 auf die vorher beschriebene Art am Lagerteil 13 des Antriebs 1 angekuppelt wird, funktioniert die erfindungsgemäße Dosiereinrichtung also wieder einwandfrei.

Bezugszeichenliste

 1 = Antrieb
 2 = Anschluß
 3 = Anschluß
 4 = Exzenter
 5 = Stößel
 6 = Kolbenstange
 7 = Dosierpumpe
 8 = Beutel
 9 = Schutzbehälter
10 = Belüftungsloch
11 = Schnappverbindung
12 = Dosierchemikal
13 = Lagerteil
14 = Kupplungsteil
15 = Öse
16 = Befestigungsbügel
17 = Nut
18 = Dosierleitung
19 = Rückschlagventil
20 = O-Ring
21 = Verstellschraube
22 = Feder
23 = Verbindungsleitung
24 = Impfstelle
25 = Klemmverbindung

LANG APPARATEBAU GMBH
Bor/C

P a t e n t a n m e l d u n g
D 6091 EP

"Dosiereinrichtung"

Die Erfindung betrifft eine Dosiereinrichtung zum Eindosieren von Chemikalien in ein Flüssigkeitssystem, insbesondere in eine Wasserleitung, mit einer in Form einer
Einwegpumpe in das in einem Behälter befindliche Dosierchemikal abgesenkten, insbesondere von einem Antrieb, wie
einem Elektromotor, Wassermotor oder Hubmagneten, zu betätigenden Tauch-Dosierpumpe.

Mit Hilfe einer solchen Einrichtung ist nach dem Hauptpatent eine Dosiereinrichtung geschaffen worden, die ein
hygienisches Auswechseln des Chemikalienvorratsbehälters
ermöglicht, einen Trockenlaufschutz überflüssig macht,
und die lange Lebensdauer des Antriebs vorteilhaft ausnutzt. Die Einwegpumpe kann nämlich in das Chemikalien-
Vorratsgefäß nach dessen Befüllung eingesteckt oder eingeschweißt und nach Entleerung des Gefäßes zusammen mit
diesem weggeworfen werden. Die beliebige Austauschbarkeit des schwächsten Gliedes der Einrichtung, nämlich
der Dosierpumpe, gestattet dem Betreiber, die bekannt
lange Lebensdauer üblicher Dosierpumpenantriebe voll
auszunutzen.

Die Erfindung bezieht sich auf eine weitere Ausgestaltung des Gegenstandes des Hauptpatentes, durch die der
Aufwand noch weiter vermindert werden soll. Die erfin-

/2

dungsgemäße Lösung ist gekennzeichnet durch einen flexiblen, belüftungsfreien Beutel mit darin eingeschweißter Einweg-Dosierpumpe als Behälter für das Dosierchemikal.

Demgemäß wird durch die Erfindung erreicht, daß nach Gebrauch nicht mehr ein stabiler, voluminöser Behälter wegzuwerfen ist sondern nur noch ein einfacher - ebenfalls die Pumpe enthaltender - Beutel.

Gemäß weiterer Erfindung kann der flexible und belüftungsfreie, das Dosierchemikal und die Einweg-Dosierpumpe aufnehmende Beutel in ein Schutzgebinde, d. h. in einen belüfteten Schutzbehälter, eingesetzt sein, der mechanisch so stabil und steif ist, daß er den Beutel vor eventuellen Beschädigungen schützt. Der mit einer oder mehreren beliebig anzuordnenden Belüftungsöffnungen ausgestattete Schutzbehälter kann außerdem wenigstens einen Teil der Kupplungsteile und Leitungen zum Koppeln der Pumpe mit dem Pumpenantrieb enthalten. Wenn der Schutzbehälter beim Austausch von Beutel und Pumpe weiter verwendet, d. h. erneut mit Beutel und Pumpe versehen wird, hat die Erfindung also auch den Vorteil, daß wertvolle Leitungs- und Kupplungsteile für einen längeren Gebrauch zur Verfügung stehen und nicht schon nach einmaliger Benutzung wegzuwerfen sind. Der Schutzbehälter muß eine Belüftung aufweisen, damit der sich in ihm bei Betrieb befindliche Beutel im Maße des abgepumpten Dosierchemikals zusammenziehen kann. Demgegenüber braucht der Beutel selbst natürlich keine Belüftung, da er sich beim Abpumpen des Chemikals zusammenziehen kann bzw. soll.

/3

0029979

Fig.1

Ansicht X

Fig.2

**Europäisches Patentamt**

# EUROPÄISCHER RECHERCHENBERICHT

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| | DE - A - 2 352 677 (LANG APPARATE-BAU) <br><br> * Seite 3, Zeile 9 bis Seite 6, Zeile 30; Figuren 1-4 * <br><br> -- | 1,2 | G 05 D 11/03 <br> B 65 D 47/34 <br> F 04 B 23/02 |
| | US - A - 3 869 071 (H.M. ROBERTS) <br><br> * Das ganze Dokument * <br><br> -- | | |
| | US - A - 2 859 899 (W.E. KRAMER et al.) <br><br> * Das ganze Dokument * <br><br> -- | 1,2,4 | RECHERCHIERTE SACHGEBIETE (Int Cl ³) |
| | DE - A - 1 782 319 (DIAMOND INTERNATIONAL CORP.) <br><br> * Seite 4, Zeile 23 bis Seite 6, Zeile 17; Seite 14, Zeile 3 bis Seite 16, Zeile 21; Figur 1 * <br><br> -- | 1,2,4 | G 05 D 11/00 <br> 11/03 <br> F 04 B 23/02 <br> B 65 D 47/34 <br> 83/00 <br> C 02 F 1/00 |
| | DE - A - 2 438 298 (P. MESHBERG) <br><br> * Seite 4, Zeile 24 bis Seite 7, Zeile 18; Figuren 1,2 * <br><br> -- | 1,2 | |
| | DE - A - 2 159 247 (LANG APPARATE-BAU) <br><br> * Seite 5, Zeilen 12-27; Figur 1 * <br><br> -- | 3 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsatze |
| E | EP - A - 0 022 179 (CILLICHEMIE ERNST VOGELMANN & CO.) <br><br> * Ansprüch 1; Figur * | 1,3 | E: kollidierende Anmeldung <br> D: in der Anmeldung angeführtes Dokument <br> L: aus andern Grunden angeführtes Dokument <br> &: Mitglied der gleichen Patentfamilie, ubereinstimmendes Dokument |

Der vorliegende Recherchenbericht wurde fur alle Patentanspruche erstellt.

| Recherchenort | Abschlußdatum der Recherche | Prufer |
|---|---|---|
| Den Haag | 09-03-1981 | POINT |

EPA form 1503.1   06.78